# EUROPEAN PATENT APPLICATION

(11) **EP 4 023 542 A1**
(43) Date of publication of application: **06.07.2022**
(21) Application number: 21217402.3
(22) Date of filing: 23.12.2021
(51) Int. Cl.: B63B 22/00

(54) **SURFACE DEPLOYED COMMUNICATION BUOY**

(30) Priority: 29.12.2020 GB 202020674
(71) Applicant: Thales Holdings UK Plc, Reading, Berkshire RG2 6GF (GB)
(72) Inventor: SHEPPARD, Nick, Reading, RG2 6GF (GB); HOOPER, Craig, Reading, RG2 6GF (GB); BOND, Andrew, Reading, RG2 6GF (GB); THOMAS-BENNETT, Digby, Salisbury, SP1 3ND (GB)
(74) Representative: Sibley, Lara Ann

(57) **Abstract**

Described is a sub-aquatic deployed buoy (214), comprising: a submersible module (222) comprising a communications module (225); a surface module (224) comprising a deployable float (218); an umbilical (226) connecting the surface module and communications module, wherein the buoy has a pre-deployment configuration in which the submersible module and surface module are directly attached, and a deployed configuration in which the submersible module and surface module are detached such that the submersible module can be suspended below the surface module via the umbilical; the buoy further comprising an attachment (227) which attaches the surface module and submersible module in the pre-deployment configuration; and, a release actuator (229) which is operable to detach the surface module and submersible module at a submerged location.

## Description

### Technical Field

This invention relates to a communication buoy for a marine application. In particular, the invention relates to a communication buoy which is rendered at least partially operational prior to reaching the surface of the water.

### Background

Many systems for providing communications with submerged vessels are known. One method of providing such communications is via sonar buoys deployed from aircraft or surface vessels. These buoys can include the passive or active sub-aqua sonar transducers. For example, GB2339172 discloses a sonobuoy deployable from an aircraft. The sonobuoy has an inflatable float, an antenna, a depth control cord for lowering a transducer to predetermined depths, a deployable drogue to resist motion of subsea currents and tides by supplying drag in vertical and horizontal directions and a sonar unit arranged within a canister. On detection of immersion the float is inflated from a gas bottle. The lower portion of the canister separates and descends, unreeling a cable and the float and upper portion remain floating. A compliant portion of the cable stretches and pulls the drogue and sonar unit from the canister, the drogue deploys and the canister is jettisoned. The compliant portion of the cable also resists motion of subsea currents and tides.

An acoustic to radio frequency, A2RF, buoy is also known which is launched from an aircraft or a submarine's trash disposal unit, TDU. After ejection, the A2RF buoy drops clear of the sub prior jettisoning ballast weights which causes the buoy to surface. Once at the surface the A2RF deploys an acoustic component which descends to an operating depth on an umbilical.

Other examples of sonobuoys, or sonar buoys, are nominally 13cm in diameter with a length of 90cm. They are deployed from aircraft, ships or submerged vessels, e.g. submarines, to provide telemetry across the air-water surface boundary. The size of these sonorbuoys can conform to the physical and operational characteristics of standard submarine aft signal ejectors.

An example of such a sonobouy is provided WO2013024258 which describes a buoy which deploys a floatation device upon reaching the surface followed by a submerged component which descends on an umbilical cable to the operational depth, as described above for the A2RF.

The prior art systems known to date suffer numerous operational drawbacks. The present invention seeks to provide an improved surface deployed communication buoy.

### Summary

The present invention provides a sonar and/or communication buoy and/or plurality of buoys that can at least partially prepared for operation prior to reaching the surface of the water.

The present invention also provides a buoy for which the ascent velocity can be controlled to reduce pluming and surface splash.

The present invention also provides buoy which is configured to have a submerged separation and deployment of a submersible module which induces an amount of drag that can aid the unfurling of a connecting umbilical. This can provide more reliable deployment in which the drag created by the separated submersible component reduces the potential for entanglement of the umbilical. This is achieved due to the tension that is introduced into the umbilical by the drag of the submersible module, rather than relying on gravity or the need to introduce negative buoyancy.

Providing the submersible component with a hydrodynamic brake which may be provided by the acoustic module(s) can increase the amount of drag created by the submersible module and further increase the tension on the umbilical. The increased tension can also help control the rate of ascent to reduce surface plume or splash when breaking the surface.

The time at which the float and/or brake is deployed may assist with controlling the ascent velocity and duration, and further help with reducing the surface plume.

The submersible module may comprise a hydrodynamic brake which is deployable from a stowed position to a deployed position so as to retard the ascent velocity of the buoy. The hydrodynamic brake may be deployable after the separation of the submersible module and surface module. The hydrodynamic brake may be deployable at either one of a predetermined depth or a predetermined velocity.

The skilled person will appreciate that except where mutually exclusive, a feature described in relation to any one of the aspects, examples or embodiments described herein may be applied to any other aspect, example, embodiment or feature. Further, the description of any aspect, example or feature may form part of or the entirety of an embodiment of the invention as defined by the claims.

### Brief Description of the Drawings

Examples and embodiments of the invention will now be described with reference to the following drawings in which:
Figure 1 shows the deployment sequence of a known sonar buoy;
Figure 2 shows the deployment sequence of a sonar buoy according to the present invention;
Figure 3 shows a schematic representation of a sonar buoy indicating some example components that may be included;
Figure 4 shows an example of a schematic arrangement of the components shown in the buoy of Figure 3;
Figure 5 shows an example of an array of sonar buoys and a sonar buoy having an array of acoustic modules;
Figures 6 and 7 show examples of cable reels which may be used to accommodate the umbilical.

### Detailed Description

The following description relates generally to sonar buoys and methods of deploying the same. It will be appreciated, however, that the invention may extend to other types of buoys which have a surface module and a submersible module but which do not require an acoustic module and which are not a sonar buoy.

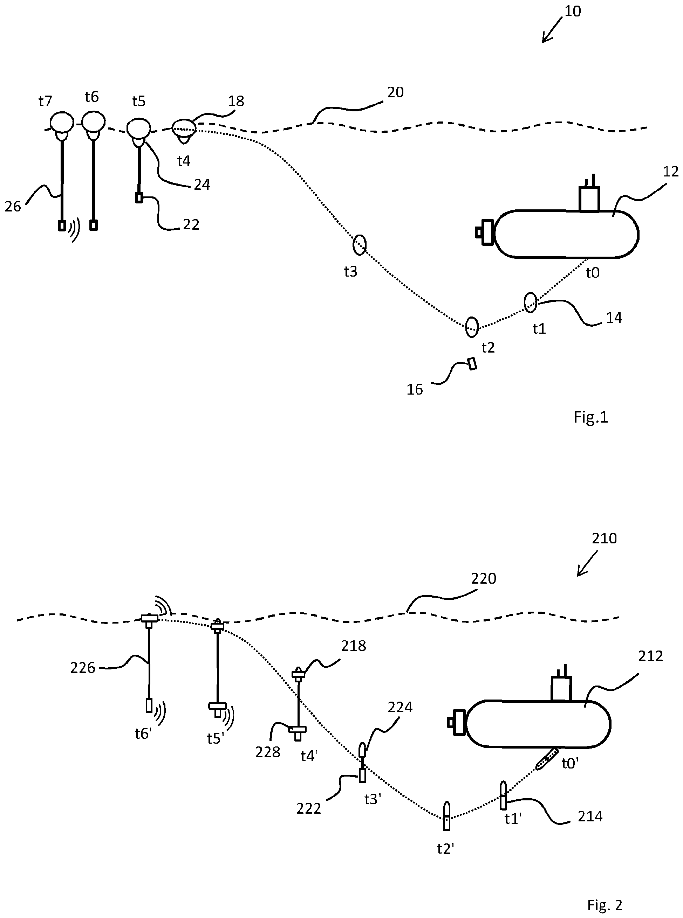

Figure 1 shows a schematic representation of a known system 10 which may be referred to as an acoustic to radio frequency buoy, A2RF, and which is shown as being deployed from a submersible vessel, i.e. a submarine 12. The times t₀ to t₇ represent time intervals from the launch of the buoy 14 to the transmission of acoustic waves once fully deployed. The buoy 14 may be launched from the underside of the submarine, specifically the trash disposal unit, TDU, at time t₀. The buoy 14 comprises a descent ballast 16 when launched such that the buoy rights itself and descends away from the vessel during time t₁, for a predetermined amount of time or to a predetermined depth at which point the ballast 16 is released t₂. This causes the buoy 14 to ascend t₃ until surfacing at time t₄. Shortly after surfacing an inflatable float 18 is deployed to stabilise the buoy on the surface 20. The operation time to surface and deploy the buoy 14 may be several minutes depending on the depth of launch. At time t₅ an acoustic module 22 is deployed from the floating surface module 24 of the buoy 14. The acoustic module 22 descends, via gravity, on an umbilical 26 which provides a communication line between the acoustic module 22 and the surface module 24. Once fully deployed at the operation depth t₆, the acoustic module 22 provides acoustic information to the surface module 24 which, in turn, transmits the information to air using known techniques t₇.

### Overview

Figures 2, 3 and 4 show a method of deploying a sonar buoy 214 and schematic representations of a sonar buoy 214 according to the present invention. The sub-aquatic launched buoy 214 comprises a submersible module 222 and a surface module 224. The submersible module 222 may include one or more communication modules such as an acoustic module 225. The surface module 224 may comprise a float 218 which may be deployable when the sonar buoy 214 and surface module 224 are submerged below surface 220 and prior to surfacing. The surface module 224 and submersible module 222 may be attached via an umbilical 226.

The buoy 214 is a sub-aquatic launched buoy in that it is launched from a sub-aquatic location such as from the underside of the surface vessel or submersible vessel. This is in contrast to a surface deployed buoy which may enter the water from above.

The buoy 214 may have a pre-deployment configuration in which the submersible module 222 and surface module 224 are directly attached, and a deployed configuration in which the submersible module 222 and surface module 224 are detached from one another such that the submersible module 222 can be suspended below the surface module 224 via the umbilical 226 when in use. The buoy 214 may further comprise an attachment 227 which directly attaches the surface module 224 and submersible module 222 in the pre-deployment configuration and a release actuator 229 which is operable to disengage the attachment 227 to separate the surface module 224 and submersible module 222. The detachment of the surface module 224 and submersible module 222 may be carried out when the surface module 224 and submersible module 222 are submerged.

The separation of the surface module 224 and the submersible module 222 may be executed at a predetermined point in the ascent and prior to the surface module 224 breaking the surface of the water 220. For example, separation may occur at a predetermined depth, a predetermined time or a predetermined event. The predetermined depth may be an absolute depth, or a depth relative to the maximum depth, e.g. 100m above maximum depth. The predetermined time may be in relation to the launch, surfacing, or another event. For example, the separation may occur at a time post-launch or pre-surfacing, such as 1 minute prior to surfacing or 2 minutes after launch. The separation may occur at time that is sufficient to allow the unfurling of the umbilical and full deployment of the submersible module 222 shortly before the buoy surfaces. The separation may define a first ascent stage and a second ascent stage.

Once separated and the submersible module 222 deployed, the acoustic module 225 may start transmitting. The transmission may occur prior to surfacing.

The buoy(s) 214 described herein may have different uses. The uses may include sonar, hydro-acoustics (in which hydrophones may be employed for listening purposes), echo sounding (including bathymetry), long baseline acoustic positioning systems and bi-static sonar, amongst others. The buoy 214 may be used for investigating the environment local to the buoy when deployed, such as depth of the body of water, or as a means of providing communication to and/or from a subsea vessel 212. Thus, a submerged acoustic module 225 may be connected by an umbilical to a surface module which provides RF communication with a receiver such as a base station. The submerged acoustic module 225 may comprise an acoustic transducer for communicating with a submerged vessel, for example, the vessel 212 which launched the buoy 214, or some other installation, acoustically.

The buoy 214 may include part of a communication system and, as such, have one or more communications units 230. The communication unit may be provided within the surface module 224. The communication unit 230 may include a transmitter and/or a receiver. The transmitter may be an RF transmitter such as a UHF or VHF. The transmitter may transmit to one or more of a land based, airborne or marine vessel via an antenna 232. Thus, the buoy 214 may receive data which is to be transmitted to, for example, an aircraft or surface vessel located in the vicinity of the buoy 214. In the case of a sonar buoy 214, the data transmitted may relate to echo sounding or other acoustic information which is received by the acoustic module 225.

The submersible module 222 may include one or more acoustic modules 225 suitable for sending and receiving acoustic signals. For example, the acoustic modules 225 may be used for echo sounding which may be utilised for determining the depth of a body of water at a particular location. Thus, the acoustic module 225 may transmit a sound wave which is reflected back to the acoustic module 225 from the sea bed. Properties of the returning signal, such as the time of flight, may be used for calculating the depth, thickness and composition of the sea bed, and/or salt domes or seeps in the body of water. Sonar buoys 214 may be employed to identify potential sources of gas and oil.

It will be appreciated that the buoy 214 described herein is arranged to have a predetermined amount of positive buoyancy such that it will ascend once the descent ballast has been released. In some examples, there may not be a descent ballast and the buoy 214 may rely on a launch velocity to provide the required depth. In order to accelerate the ascent and provide surface buoyancy, the buoy 214 may include a deployable float 218. The timing of the float 218 deployment will depend on the ascent rate required and other factors. For example, where a fast ascent is required the float 218 may be deployed shortly after the descent ballast has been released or at a particular point on the upward trajectory. For example, at a predetermined depth or after a predetermined duration. Alternatively, or additionally, the float 218 may be deployed as a step within a sequence of events or deployment stages. The deployment stages may include: launch, ballast release, ascent, surface and transmit. Further stages may include a first ascent stage, submersible separation and second ascent stage. The second ascent stage may be defined by the submersible module 222 release whereafter the acoustic module 225 may descend beneath the surface module 224 under the force of gravity/less or negative buoyancy.

Additionally, the submersible module 222 may include a hydrodynamic brake 228 which retards the ascent induced by the upwards motion of the surface module 224. The float 218 may be deployed before or after the deployment of the brake 228. In some instances, it may be deemed useful to deploy the float 218 in conjunction with the brake 228 such that brake 228 acts against the ascending force of the float 218, thereby helping with deploying the submersible module 222 and unfurling the umbilical 226.

In some instances, the deployment of the float 218 may be staged so as to deploy in an incremental manner in accordance with one or more of the deployment stages. In other examples, the buoy 214 may include one or more floats 218 that can be deployed at different stages for different purposes. For example, there may be a float 218 to accelerate ascent after the maximum depth has been reached. Thus, a float 218 may be used in place of releasing a ballast. Additionally, or alternatively, a float 218 may be deployed during part of the ascent. In another example, a float 218 may be deployed at a predetermined depth or time until surface. In yet a further example, there may be a float 218 which is deployed when the surface module 224 has broken the surface. In each case, there may be an individual float or deployment stage for one or more of the individual floats 218. Hence, there may be first float and an optional second float etc, with of the first float and second float having a staged deployment in line with ascent plan.

The float 218 may be provided by any suitable floatation devices as known in the art. The floatation device may comprise one or more gas filled expandable vessels which are arranged to inflate upon receipt of a compressed gas which forms part of the buoy 214. So, for example, the buoy 214 may be provided with a gas canister which holds compressed gas, the release of which is controlled via a controller 324 in accordance with the ascent plan. The float 214 may be provided by an inflatable bag or other vessel. The float 218 may be provided on an external surface of the surface module 224 and may partially of fully surround the surface module 224. For example, the float 218 may comprise a ring which surrounds the surface module 224. In other examples, the float 218 may comprise a number of float vessels which are distributed around the surface module 224. The individual floats may be simultaneously inflated and possibly in fluid communication with each other by virtue of one or more connecting portions or the like. In the example shown in Figure 2, the float 218 is provided as ring in the form of a collar which surrounds the surface module 224 along a mid-portion thereof. In some embodiments the float may be located towards a nose of the buoy and aft of an antenna.

An advantageous feature of the submerged deployment of the submersible module 222 is that the umbilical 226 can be unfurled using drag of the submersible module 222 in relation to the buoyancy of the surface module 224 to apply a tension to the umbilical 226. Thus, the module 222 may be released whilst ascending and the surface module 224 and submersible module 222 have upwards velocity. Deploying the umbilical 226 in this manner reduces the likelihood of entanglement and accelerates the deployment to shorten the duration between probe launch t₀' and operational readiness. In some instances, the timing of the separation between the surface module 224 and submersible module 222 may be such that the deployment is complete at a predetermined depth, time or event in the ascent plan. Thus, the deployment may be complete at the time when the surface component breaks the surface 220, for example, time t₆, or a time a prior to braking the surface such as t₄ or t₅.

The separation may be instigated by the releasing the attachment 227 using the release actuator 229.

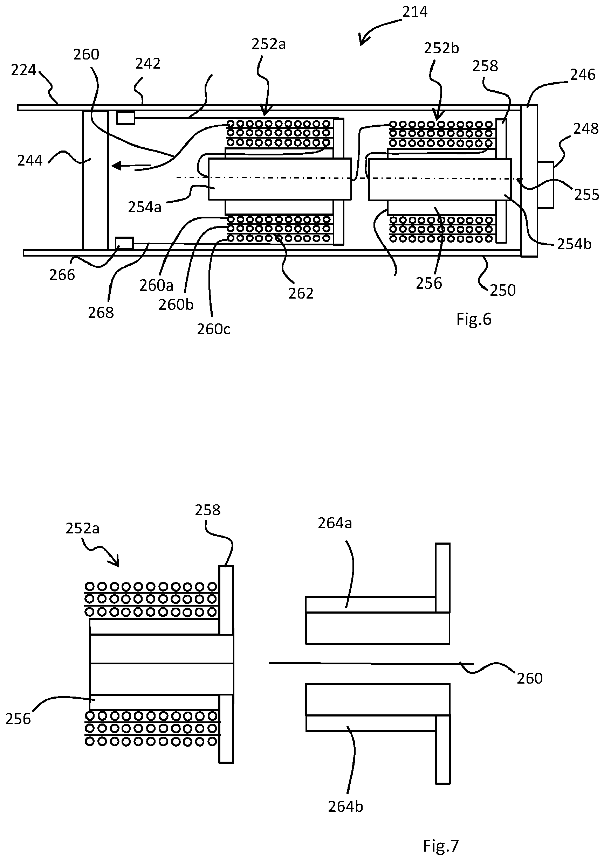

In some embodiments the submersible module 222 may comprise the acoustic module 225 and the umbilical 226 only. Thus, where the specification refers to a submergible module 222, this may be taken to be a portion of the buoy or the buoy housing, or may be restricted to be just the umbilical and acoustic modules which are released and are submerged in use. In such an embodiment, the housing in which the acoustic module and umbilical are stored remains intact and attached to the surface module. The submergible module housing may be flooded during the ascent at any point following rejection from the submersible vessel 212. The submersible module housing may include an aperture from which the acoustic module 225 and umbilical 226 can be launched. The aperture may comprise a window having a closed configuration and an open configuration. The window maybe closed with an end cap. The endcap maybe removed during launch of the buoy. The endcap may be retained within the launch tube of the submersible vessel 212. An embodiment of this is described in more detail below in relation to figure 7.

In order to further improve the deployment, the submersible module 222 may include one or more hydrodynamic brake 228. The hydrodynamic brake 228 may be used in conjunction and in opposition to the float 218 with the differential velocity acting to pull the two modules apart. The brake 228 may include one or more protuberant features which extend from and increase the surface area drag experienced by the submersible module 222. Thus, the submersible module 222 may be provided with one or more sails which extend from the body of the submersible module 222 or umbilical 226 during the ascent.

The brake 228 may be deployed with the release of the submersible module 222 from the surface module 224. Thus, the brake 228 may comprise one or more structures, such as a drogue, which deploys as the surface module 224 and submersible module 222 separate from one another. Hence, the brake 228 may comprise one or more structures which are provided within the buoy 218 in a collapsed or stowed state whilst the surface 224 and submersible 222 modules are attached, and which can be released at separation to expand into a deployed state as the surface module 224 and submersible module 222 move apart from one another.

The moment at which the brake 228 is deployed will depend on the ascent rate required and other factors. For example, where a fast ascent is required the brake 228 may be deployed shortly before the surface module 224 surfaces. This may be advantageous to retard the ascent rate prior to breakthrough to prevent undue surface breakthrough and splash that may be detectable and that give away the position of the buoy or USV. Thus, the brake 228 may be deployed at a predetermined depth or after a predetermined time. Alternatively, or additionally, the brake 228 may be deployed as a step or stage within a sequence of events or deployment stages. The deployment stages may include: launch, ballast release and ascent. Further stages may include a first ascent, submersible module separation and second ascent. During the second ascent, the submersible module 222 may be released to descend beneath the surface module 224 under the force of gravity and the brake 228 may be deployed to control the rate of ascent. The surface module 224 may include a float 218 which may be deployed before or after the deployment of the brake 228. In some instances, it may be deemed useful to deploy the brake 228 in conjunction with or shortly after the separation of the submersible module 222. In other instances, it may be useful to deploy the brake 228 shortly before or after the transmit stage been initiated.

The umbilical 226 may be of a type known in the art and include both strength members and electrically conductive members. Thus, the umbilical 226 may provide a mechanical tether between the surface module 224 and submersible module 222 and may additionally provide a cable which may carry power, electrical signals and/or data between the two modules. The data or signals may, for example, relate to deployment commands and/or communication signals/data sent between the surface module 224 and the submersible module 222. The cable may comprise multiple cores or sub cables in accordance with the required use.

The mechanical tether may be integrated with the cables provide the mechanical connection. Alternatively, the mechanical tether may include a separate line or catenary wire which is provided alongside and parallel to the cable such that the strain on the cable created by the drag or gravity on the communication module can be removed or reduced to help reduce the likelihood of a breakdown or failure in the cable due to excessive strain.

The umbilical 226 may be provided on one or more reels. The reels may be housed within the submergible module or the submergible module housing. The acoustic modules may be nested within the reels for ease of deployment and/or stowage. The reels may be deployed individually or collectively. Each reel may include its own release actuator. Various aspects of a cable reel are described below in relation to Figures 6 and 7.

Figure 6 shows a buoy 214 comprising a surface module 224 having an integrally formed submergible module housing 242. By integrally formed, it will be appreciated that the surface module 224 and maybe submergible module housing 242 joined so as to be inseparable during use or deployment of the buoy 214. The joint between the surface module 224 and submergible module housing 242 may be provided by a bulkhead which seals the surface module from ingress of seawater. However, the surface module 224 and submergible module housing may comprise a continuous cylindrical wall as a one piece structure which is homogenously formed.

The submergible module housing 242 may include one or more openings through which water can be received. The openings may be permanently open or temporarily sealed with a removable closure. In some embodiments, the opening may be provided by an aperture in the side wall of the housing 242. The opening may be provided for a primary purpose such as allowing access to one or more connection ports (not shown) which left unsealed to such that water can ingress or air escape during the ascent. The connection port may provide electrical connection to the surface module and/or submergible components.

The terminal end of the submergible module housing 242 may be sealed with an endcap 246. The endcap 246 maybe removed after, during or before deployment from the submergible vessel 212. In the example shown, there is a release mechanism 248 which is operable to release the endcap 246. The release mechanism 248 may be triggered as the buoy 214 is deployed, thereby retaining the endcap 246 in the launch tube (not shown). The release mechanism 248 may comprise a tether which is attached to the submergible vessel 212 such that launching the buoy 214 causes the tether to pull on and release a pin or the like which attaches the endcap 246 to the submergible housing module 242.

Once the endcap 246 has been removed, the submergible module housing 242 may be fully open such that it can flood upon ascent. Flooding of the submergible module housing 242 may be assisted by one or more of the openings, for example, the communication port aperture as described immediately above. Providing an opening at at or towards the opposite end of the submergible module housing 242 with respect to the endcap 246 may allow air to escape when the buoy is in an upright position upon ascent to allow flooding.

The submergible module housing 242 may comprise an exterior wall 250 which defines a hollow interior. Located within the hollow interior there may be one or more cable reels 252a,b and/or acoustic modules 254a,b. There may be a series of cable reels 252a,b and a plurality of acoustic modules 254a,b, wherein the number of cable reels 252a,b may correspond to the number of acoustic modules 254a,b. In the embodiment shown, there are two cable reels 252a,b together with two acoustic modules 254a,b. However, it will be appreciated that the number of cable reels and acoustic modules may be greater or smaller than two and different from one another. In one example, there may be three cable reels and two acoustic modules. The acoustic modules may be nested within the cable reels. The length of cable on each of the cable reels may be predetermined on the required deployed separation between individual acoustic modules and surface module 224.

Each cable reel 252a,b may be referred to as a bobbin and may comprise a central core 256 and one or more endcaps 258 to retain the cable in place. The central core may be comprise a cylindrical wall which defines a hollow interior or a through-hole aligned with a principal axis 255 such that the umbilical can pass through the centre of the core to connect to the surface module 218 and/or a subsequent cable reel and/or the acoustic module. As shown in figure 6, the through-hole may house the acoustic module 254a,b and cable 258. The principal axis 255 may correspond to the elongate axis of the buoy 214 and/or cable reels 252a,b.

The endcap(s) 258 may be provided a distal end of the cable reels only such that the cable is retained around the central core 252a,b during ascent (at which point the endcap is lowermost), but allow the cable to unfurl from the proximal end unhindered.

Each cable reel 252a,b may comprise a plurality of cylindrical winding layers 260a,b,c wound around the central core 256. Each layer of cable 260a,b,c may be separated by spacers 262. The respective layers may be connected in series and provide a single continuous cable 260 when deployed. The number of layers may be an odd number. Providing an odd number of layers is advantageous as it provides the respective ends of the cable at opposite ends of the cable reels which aids deployment and the series connection of acoustic modules 254a,b. Consecutive layers may be wound in opposite directions to help prevent the cable becoming twisted and tangled during or after deployment.

As can be seen in figure 6 there may be an inner layer 260a, a middle layer 260b, and an outer layer 260c. The inner layer may be terminate at a distal end of the cable reel and be connected to an acoustic module 254a, with the outer layer being mechanically and electrically connected to either the preceding acoustic module 254a or the surface module 224. Thus, once unfurled the umbilical is tethered to the surface module and comprises one or more acoustic modules 254a,b distributed along the length thereof.

Each of the layers 260a,b,c may be separated by spacers 262 to aid deployment of the cables. There may be a plurality of spacers 262 circumferentially distributed around the central core 256. The spacers 262 may extend from the proximal end to the distal end of each cable reel 252a,b parallel to the principal axis of the cable reels and in the unfurling direction.

As can be seen in Figure 7, the central core 252a,b may comprise two or more parts 264a,b which are assembled to provide the annular wall of the central core 252a,b around which the cable can be wound. Upon deployment, the discrete parts 264a,b may separate such that they can be discarded and the cable 260, which passes through the central core along the principal axis 255 after deployment, is released from the central core so as to be de-shrouded. In the example shown in figure 7, the cable reel 252a,b comprises two halves which are split lengthwise (e.g. along a central plane which extends along the principal axis). In such a way, the central core 252a,b may split to provide two semi-cylindrical halves which are free to fall away once the cable has unfurled. However, there may be three of more sections which the cable core splits into. The retention of the central core parts may be provided by the cable and/or one or more inter-engaged features.

With reference to Figure 2, the sub-aquatic buoy 214 may be launched from the underside of the submersible vessel 212 at time t₀'. The buoy 214 descends with the launch momentum and/or the use of descent ballast, t₁'. A maximum depth is achieved at which point the buoyancy of the buoy 214 or release of the descent ballast causes it to ascend t₂'. Between the maximum depth and surfacing at t₅', the surface module 224 and submersible module 222 are released from each other so as to be connected and tethered only by the umbilical cord t₄'. Once released, the surface module 224 and submersible module 222 will have different buoyancies and ascend at different rates until the umbilical 226 is at full stretch. More specifically, the surface module 224 will have a greater buoyancy than the submersible module 222 and ascend with greater speed. As such, the surface module 224 tows the submersible module 222 via the umbilical 226.

Generally, the acoustic modules 254a,b and brake (if present) will be released such that the umbilical 226 is at full stretch prior to the surface module 224 breaching the surface, but this may not be the case and some unfurling may occur when the surface module 224 is at the surface, in some embodiments.

A typical depth for releasing the acoustic modules 254a,b in deep water may be around 30m. In some embodiments, the separation may be between the maximum depth of umbilical and the surface of the water. The maximum length of the umbilical may be determined by the maximum stowed length, or a partial length required to provide a predetermined transducer depth. In some embodiments, a delayed separation point may be required, for example, where it is desirable to control the velocity of the buoy prior to or at the surface. For example, it may be undesirable for the buoy to breach the surface at high speed. Therefore the deployment depth can be determined beforehand using following equations (ignoring drag effects) such that the velocity might be controlled:
B = p * V * g, where: p is the density of the liquid the object is immersed in, measured in kg/m³; V is the volume of the displaced liquid, measured in m³; g is the gravitational acceleration in m/s², and B is the buoyant force.
F=B-mg, where B may be greater than mg; m=mass; a = acceleration, ignoring drag effects, and,
V=sqrt(u)+2a*depth, where u is an initial speed.

In the example of Figure 6, each of the cable reels 252a,b has a separate release actuator 266 such that they can be released and unfurled separately to reduce the risk of entanglement. The release actuator may comprise a restraint 268 which is released at the appropriate time. The restraint 268 may comprise one or more straps which extend from the surface module 224, submersible module housing 242 and/or bulkhead 244. As the submersible module housing 242 is flooded at or shortly after the point of launch, the cable reels 252a,d and acoustic modules 254a,b will be negatively buoyant meaning they will sink as soon as the restraint 268 is released.

In one embodiment, the one or more straps 268 may severable upon application of an electrical current or heat. The straps 268 may be elongate members which extend from a proximal end of the buoy to a second end which is attached to the lower (distal) end of the cores 256, for example, the endcap which sits below the cables. Each cable reel 252a,b may comprise its own plurality of restraining members such that they can be individually released.

The length of the individual sections and/or length of the umbilical 226 may be application specific and dependent on the predetermined communication depth (either receiving or transmitting). Similarly, the timings of the release may be application specific.

In some embodiments, the length of the umbilical 226 may be predetermined prior to launch. Thus, each cable reel may be configured to accommodate a predetermined amount or portion of the umbilical 226. In some embodiments, the controller and/or release actuator may be configured to release all of the cable reels or a sub-set of the cables reels such that only a portion of the total umbilical is deployed. Hence, the controller which controls the release actuator may be configured to provide a staged release of the cable reels or release only a predetermined number such that the length of the umbilical can be selected following deployment from the submersible vessel.

The submersible module 222 may be arranged to have a lower or negative buoyancy such that it descends away from the surface module 224 after separation. Additionally, or alternatively, the submersible module 222 may include one or more drag inducing features which may be deployable after launch, or, more particularly, after being released from the surface module 224. The drag inducing features may include the aforedescribed hydrodynamic brake 228 or may be restricted to the acoustic modules.

At time t₅' the acoustic module 225 begins to operate either as a passive receiver and/or as a transmitter/receiver. Thus, each acoustic module 225 may be passive, e.g. a hydrophone, or an transmit/receive device to send and/or receive acoustic signals.

Generally, throughout this disclosure, the term communication module and/or acoustic module may refer to a device comprising one or more from the group comprising: a hydrophone, a transceiver and a vector sensor. The vector sensor may comprise a combination of a hydrophone and an accelerometer or pressure gradient device.

The buoy 214 has an antenna 232 attached to or integrated within the surface module and preferably located above the water line in service. The antenna 232 is connected to a transceiver for transmitting and receiving signals associated with the communication module to a base station which may be airborne, land based or a surface vessel. At time t₆', the communication unit starts to communicate via antenna 232.

The buoy 214 may comprise a generally cylindrical housing which may be dimensioned to be received in and launched from an ejector system. Typical dimensions will include a diameter of less than 100mm and a length less than 1m in order for the buoy to be received within the suitable ejector system. The ejector system may be a trash disposal unit, TDU, of a submarine, for example.

The surface module 224 and/or the submersible module 222 may include a power supply 236 such as a battery. The power supply 236 may provide power to the various components of buoy 214. It will be appreciated that each of the components may include a dedicated power supply.

The buoy may controller 234 that may be connected to one or more of the deployable float 218, the communications unit 230, the brake 228, the umbilical 226 and the acoustic module 225. The controller 234 may be provided by a single controller located on in either of the surface module 224 or submersible module 222. The controller 234 may be arranged to control some or all of the processes which are carried out during the ascent and, additionally or alternatively, when the buoy 214 is on the surface of the water. The controller 234 may also be used to control the RF communication and acoustic module 225.

Although the controller 234 is described as a generic controller programmed to carry out all of the actions, the controller may be a distributed controller which comprises a plurality of local controllers distributed throughout the buoy 214. Thus, the communications unit 230 may include a dedicated controller 234 for handing the communications, as is well known in the art. Another controller 234 may be utilised to control the ascent of the buoy 214 and determine when each phase of the ascent occurs in accordance with a predetermined schedule or ascent plan. The controller 234 may be distributed between the surface module 224 and the submersible module 222.

The controller(s) 234 may include one or more processors and/or memory which carry instructions which, when executed by the one or processors, carry out the method described herein. Thus, the controller 234 may receive data relating to the present state of the buoy 214 from one or more sensors. The sensor data may be used by the controller to determine whether one or more operations of the buoy 214 should be carried out. The operations may include: release of the submersible module 222; activation of the float 218; and deployment of the brake 228, for example. The controller may include one or more timers which can be programmed to provide event times during the ascent. A first timer may be set to release the descent ballast at time t₂'. A second timer may be used to indicate when the submersible should be released, and so on.

The controller 234 may be utilised to control the communications which are transmitted or received or dictate when the communications can or should be transmitted or received. Thus, the controller 234 may be coupled to the communications unit and/or the acoustic module 225 to provide an indication of when the buoy 214 has surfaced, and/or when the acoustic module 225 is deployed. In some examples, the acoustic module 225 may interface directly with the communications unit 230 and provide status updates, such as an activation or communication ready signal when fully deployed.

The communications unit 230 may include signal processing equipment and a transceiver for transmitting and receiving the communication signals via the antenna.

As noted above, the buoy 214 may include one or more sensors 238 which provide information relating to the operational points in the ascent. For example, the buoy 214 may include one or more depth sensors for determining when a ballast should be released, or when the float 218 should be released. The sensors 230 may include a depth sensor, a GPS location device, an accelerometer arranged to determine the speed or attitude of the buoy, a pressure sensor or a temperature sensor. Other sensors may be apparent to the skilled person.

The sensors 230 may be connected to the controller 230 to provide data signals thereto, or may be connected directly to one or more of the components of the buoy 214. For example, a depth sensor may be connected directly to one or more of the descent ballast, the deployable float 218, or the release actuator 229 such that one or more of these components may be deployed or operated at the appropriate depth in the ascent cycle. In some examples, an accelerometer may be used to deploy or adjust the brake 228 so as to control the rate of ascent and reduce the extent of surface splash when the buoy 214 breaks the water line. In other examples, the sensors 230 may be an integral part of a component or module of the buoy 214. For example, the release actuator 229 for releasing the submersible module 222 may be a pressure sensitive latch that automatically disconnects when the buoy 214 is at a particular depth. In this case, the sensor 230 may be directly incorporated into the release actuator 229 and no further communication is required from the controller 230.

It will be appreciated that the sensors 230 utilised in the buoy 214or components thereof may be electrical or mechanical.

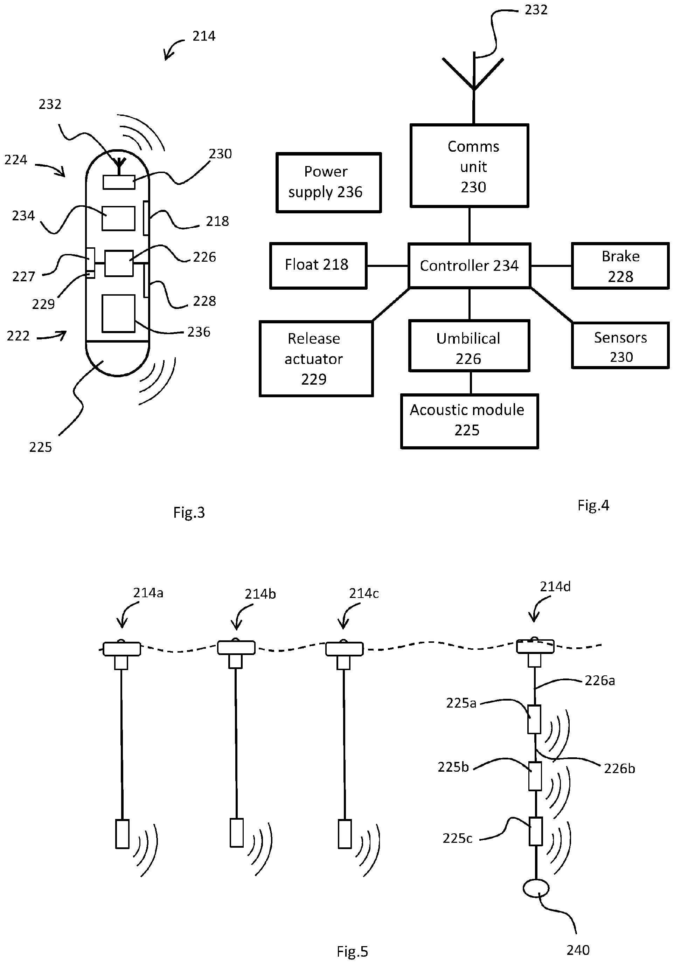

Referring to Figure 5, there is shown two examples of communication arrays which may be configured and controlled to provide a phased array functionality. The phased array may provide beam forming and/or beam steering capabilities in an array of buoys 214' or a single buoy 214". The individual buoys described in relation to Figures 2 to 4 do not have beamforming, beamsteering or phased array capabilities.

The first example shown on the left hand side of Figure 5 shows an array of buoys 214'a-c, in which each buoy includes a surface module and a submersible module. The individual buoys 214'a-c may be similar to those described above and may be deployed in a similar manner. Hence, the buoys 214'a-c may be deployed from the underside of a surface or submersible vessel 212 and may be controlled so as to separate the surface and submersible modules upon ascent such that a communication module is deployed and operational prior to the individual buoys surfacing. Thus, a vessel 212 may launch a first buoy 214'a at a first location before proceeding to a second location and launching a second buoy 214'b. This process can continue until the required number of buoys have been launched and deployed.

In some examples, it may be desirable to control the ascent of the buoys 214'a-c so that each of the buoys 214a-c has a different ascent time. Thus, the first buoy 214a may be configured to have a slower ascent time than buoy 214c such that the surfacing time of the buoys 214a-c can be coordinated and closely grouped together.

The right hand example of Figure 3 shows a single buoy 214d with a plurality of communication modules 225a-c distributed along its length in a linear vertical array. Thus, the buoy 214d includes a first communication module 214c at a first depth, a second communication module 214b at a second depth and so on. The number of communication modules may be between 2 and N, where N is an integer.

In some examples, it may be desirable or advantageous to provide an array of buoys 214a-c in which each of the buoys includes a vertical array of communication modules as provided by buoy 214d.

The acoustic beams generated by the array(s) of the communication modules can be steered using known techniques. The beams may be used to determine the range and direction of undersea vehicles such as submarines. Further, the beams may be shaped using known techniques and reconfigured by turning selected communication modules on or off. The beam reconfiguration technique may provide the ability to cut out directional sources of noise or interference.

The deployment of the communication modules 225a-c may be carried out during the ascent, as with the buoys 214 described in Figure 2-4. The communication modules may be connected by in mechanical series along a common umbilical line and may be equidistantly spaced therealong. Thus, a first portion of umbilical 226a may extend from the surface module 224 to the uppermost communication module 225a. A tether, line or catenary wire of the umbilical 226a may be attached to an upper surface of the uppermost communication module 225a. A second portion of the umbilical 226b may extend between the uppermost and next intermediate communication module 225b. A tether, line or catenary wire of the umbilical 226b may be attached to an underside of the upper communication module 225a and attach to an upper surface of the intermediate (or final as the case may be) module 225b. Thus, the communication modules 225a-c may be arranged in a series or daisy chained arrangement.

The communication modules 225a-c may be released from the surface module 224 simultaneously or sequentially with each detaching from the surface module 224 in order as the previous communication module is fully or partially deployed. Hence, the deployment of the lowest communication module 225c may occur with the separation of the submersible module 222 and surface module 224. The deployment of the second communication module 225b may be instigated by a predetermined level of tension on the interconnecting portion of the umbilical 226c.

As also shown in Figure 5, the buoy 214d, and any of the buoys 214, 214a-c, may include a weight 240 to help stabilise the acoustic modules such that they do not drift during use.

The components and deployment of the buoys 214 described in connection with Figures 2-4 may be applied to the buoys described in connection with Figure 5.

Reference to examples used above maybe understood to mean an example embodiment of the invention as defined by the claims. However, it will be apparent to the skilled addressee that some of the examples are provided for background purposes only.

Further embodiments are set out in the following clauses:
1. A sub-aquatic deployed buoy, comprising:
   a submersible module comprising a communications module;
   a surface module comprising a deployable float;
   an umbilical connecting the surface module and communications module, wherein the buoy has a pre-deployment configuration in which the submersible module and surface module are directly attached, and a deployed configuration in which the submersible module and surface module are detached such that the submersible module can be suspended below the surface module via the umbilical;
   the buoy further comprising an attachment which attaches the surface module and submersible module in the pre-deployment configuration; and,
   a release actuator which is operable to detach the surface module and submersible module at a submerged location.
2. A sub-aquatic deployed buoy according to clause 1, wherein the release actuator is operable to detach the surface module and submersible module at one or more of: a predetermined depth; a predetermined time; or a predetermined event.
3. A sub-aquatic deployed buoy according to clauses 1 or 2 further comprising a controller connected to the release actuator, wherein the release actuator is operable to detach the surface module and submersible module upon command from the controller.
4. A sub-aquatic deployed buoy according to any preceding clause, wherein the release actuator is responsive to at least one sensor which provides a release signal to the release actuator, wherein the release signal is indicative of the depth of the sonar buoy.
5. A sub-aquatic deployed buoy according to clause 4, further comprising the sensor.
6. A sub-aquatic deployed buoy according to any preceding clause, wherein the umbilical comprises one or more cable reels housed within a submersible module housing.
7. A sub-aquatic deployed buoy according to clause 6, wherein the communications modules are nested within the cable reel.
8. A sub-aquatic deployed buoy according to either of clauses 6 or 7 wherein the cable reels include a central core around which the umbilical is wound, wherein the central core comprises at least two parts which are separable following the umbilical being unfurled therefrom.
9. A sub-aquatic deployed buoy according to any of clauses 6 to 8, wherein the or each cable reel includes a separate release mechanism.
10. A sub-aquatic deployed buoy according to clause 9 when dependent on any of clauses 3 to 9, wherein the controller is configured to carry out a staged or selective release of the cable reels at the submerged location.
11. A sub-aquatic deployed buoy according to clause 9, wherein the release actuator comprises one or more straps which extend between the or each cable reel and the surface module and submergible module housing, wherein the straps are severable to provide the release.
12. A sub-aquatic deployed buoy according to clauses 6 to 11, comprising a plurality of cable reels, wherein each cable reel comprises a predetermined length of umbilical, wherein, optionally, the length of umbilical on each cable reel is different to at least one other cable reel.
13. A sub-aquatic deployed buoy according to any preceding clause, wherein the deployable float is arranged to be deployed prior to the surfacing of the surface module.
14. A sub-aquatic deployed buoy according to clause 13, wherein the deployable float is arranged to be deployed at one or more of a predetermined depth; a predetermined time or a predetermined event.
15. A sub-aquatic deployed buoy according to any preceding clause, wherein the communications module comprises an acoustic module.
16. A sub-aquatic deployed buoy according to clause 15, wherein the acoustic module comprises one or more from the group comprising: a hydrophone, a transceiver and a vector sensor.
17. A sub-aquatic deployed buoy according to any preceding clause, wherein the submersible module includes a vertical array of communications modules.
18. A sub-aquatic deployed buoy according to clause 17, wherein the plurality of communication modules are operable as a phased array.
19. A sub-aquatic deployed buoy according to any preceding clause, wherein the surface module comprises an antenna and a communications unit for sending and receiving communications related to the communications module to a remote transceiver.
20. A method of deploying the buoy according to any preceding clause, comprising:
   providing the buoy within a marine vessel;
   launching the buoy from a submerged location of the marine vessel;
   operating the release actuator so as to release the submersible module and the surface module prior to the surface module breaking the surface of the water.
21. A method according to clause 20, wherein the release actuator is operated at one or more of a predetermined depth, a predetermined time or a predetermined ascent event.
22. A method according to either of clauses 20 or 21, further comprising deploying the deployable float prior to the surface module breaking the surface of the water.
23. A method according to clause 22, wherein the deployable float is deployed at one or more of a predetermined time, a predetermined depth or a predetermined ascent event.
24. A method according to any of clauses 20 to 23, when dependent on clauses 6 to 17, and comprising a plurality of cable reels, the method further comprising deploying each of the plurality cable reels in sequence and at different depths breaking the surface of the water
25. A method according to any of clauses 20 to 24, further comprising ejecting a plurality of buoys from the or a plurality of marine vessels.
26. A method according to any of clauses 24 to 25, further comprising transmitting a plurality of signals, each of the signals being transmitted by each of the plurality of buoys.

It will be understood that the invention is not limited to the examples and embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A sub-aquatic deployed buoy, comprising:
a submersible module comprising a communications module;
a surface module comprising a deployable float;
an umbilical connecting the surface module and communications module, wherein the buoy has a pre-deployment configuration in which the submersible module and surface module are directly attached, and a deployed configuration in which the submersible module and surface module are detached such that the submersible module can be suspended below the surface module via the umbilical;
the buoy further comprising an attachment which attaches the surface module and submersible module in the pre-deployment configuration; and,
a release actuator which is operable to detach the surface module and submersible module at a submerged location.

2. A sub-aquatic deployed buoy as claimed in claim 1, wherein the release actuator is operable to detach the surface module and submersible module at one or more of: a predetermined depth; a predetermined time; or a predetermined event, and wherein, optionally, the buoy further comprises a controller connected to the release actuator, wherein the release actuator is operable to detach the surface module and submersible module upon command from the controller.

3. A sub-aquatic deployed buoy as claimed in any preceding claim, further comprising at least one sensor, wherein the release actuator is responsive to the at least one sensor which provides a release signal to the release actuator, wherein the release signal is indicative of the depth of the buoy.

4. A sub-aquatic deployed buoy as claimed in any preceding claim, wherein the umbilical comprises one or more cable reels housed within a submersible module housing, and wherein the communications module is optionally nested within a cable reel.

5. A sub-aquatic deployed buoy as claimed in claim 4, wherein the one or more cable reels include a central core around which the umbilical is wound, wherein the central core comprises at least two parts which are separable following the umbilical being unfurled therefrom, and wherein the or each cable reel optionally includes a separate release mechanism, and wherein the release actuator optionally comprises one or more straps which extend between the or each cable reel and the surface module and submergible module housing, wherein the straps are severable to provide the release.

6. A sub-aquatic deployed buoy as claimed in claim 3, wherein the umbilical comprises one or more cable reels housed within a submersible module housing, wherein the or each cable reel includes a separate release mechanism, and wherein the controller is configured to carry out a staged or selective release of the cable reels at the submerged location.

7. A sub-aquatic deployed buoy as claimed in claims 4 to 6, comprising a plurality of cable reels, wherein each cable reel comprises a predetermined length of umbilical, wherein, optionally, the length of umbilical on each cable reel is different to at least one other cable reel.

8. A sub-aquatic deployed buoy as claimed in any preceding claim, wherein the deployable float is arranged to be deployed prior to the surfacing of the surface module, wherein the deployable float is optionally arranged to be deployed at one or more of a predetermined depth; a predetermined time or a predetermined event.

9. A sub-aquatic deployed buoy as claimed in any preceding claim, wherein the communications module comprises an acoustic module, wherein the acoustic module optionally comprises one or more from the group comprising: a hydrophone, a transceiver and a vector sensor.

10. A sub-aquatic deployed buoy as claimed in any preceding claim, wherein the submersible module includes a vertical array of communications modules, wherein the plurality of communication modules are optionally operable as a phased array.

11. A sub-aquatic deployed buoy as claimed in any preceding claim, wherein the surface module comprises an antenna and a communications unit for sending and receiving communications related to the communications module to a remote transceiver.

12. A method of deploying the buoy as claimed in any preceding claim, comprising:
providing the buoy within a marine vessel;
launching the buoy from a submerged location of the marine vessel;
operating the release actuator so as to release the submersible module and the surface module prior to the surface module breaking the surface of the water.

13. A method as claimed in claim 12, wherein the release actuator is operated at one or more of a predetermined depth, a predetermined time or a predetermined ascent event.

14. A method as claimed in either of claims 12 or 13, further comprising deploying the deployable float prior to the surface module breaking the surface of the water, wherein the deployable float is optionally deployed at one or more of a predetermined time, a predetermined depth or a predetermined ascent event.

15. A method as claimed in any of claims 12 to 14, further comprising at least one of:
a. deploying each of a plurality cable reels in sequence and at different depths breaking the surface of the water, wherein the umbilical comprises the plurality of cable reels housed within a submersible module housing;
b. ejecting a plurality of buoys from the or a plurality of marine vessels, and optionally transmitting a plurality of signals, each of the signals being transmitted by each of the plurality of buoys.
